# EUROPEAN PATENT APPLICATION

(11) **EP 2 180 763 A1**
(43) Date of publication of application: **28.04.2010**
(21) Application number: 08167357.6
(22) Date of filing: 23.10.2008
(51) Int. Cl.: H05B 33/08

(54) **Energy-saving drive device for controlling an led heat dissipation temperature**

(71) Applicant: Kao, Hui-Lung, Taoyuan Hsien 338 (TW)
(72) Inventor: Kao, Hui-Lung, Taoyuan Hsien 338 (TW)
(74) Representative: Dossmann, Gérard

(57) **Abstract**

An energy-saving drive device for controlling an LED heat dissipation temperature wherein, when the device converts signal voltage into operating energy for control, a feedback signal voltage (V6) is obtained at the LED load terminal (40). Meanwhile, the signal voltage is continuously compared by the calculus processor (21). Moreover, the oscillation waveform, the amplitude voltage, and the linearity of waveform are controlled by at least 3 times of software modulation to automatically offset and amplify the attenuated signal voltage and to enable the power amplifier (36) to output a new operating voltage signal (V4n) for correcting the voltage and the current, thereby driving the LED of high luminance and high power in the conditions of low voltage and low current depending on a load characteristic of the LED for achievement of the efficiency of energy conservation, no issue on overheating, and the virtues of safety and environmental protection.

## Description

### 1. Field of the Invention

The invention relates to a LED-based energy-saving driving device and particularly to a drive control device that prevents LED from generating high temperature and overheat.

### 2. Description of the Related Art

Thanks to the technology of a LED is continuously improved, the luminance brought by the LED increases without interruption, and thus an indicating lamp at early stages and even an improved illuminator and a light-source product that are featured with power saving, environmental protection, long service life, and small size are applied and function for a general product, a vehicle, a street lamp, and a backlight panel ; the market scale and the development capability are quite considerable, which may be pushed worldwide in the future. However, only the high-power LED's input power of 15% through 20% is converted into optics, so the rest of input power of 80% through 85% is converted into heat. If the heat energy is not effectively solved and not properly discharged to the outside, a LED crystal grain the LED crystal grain boundary is caused to generate high temperature, which affects wavelength and even attenuates the luminescent efficiency and lowers the service life; the issue on the heat caused by the system is a key point affecting the product. In a conventional technology that solves the issue on heat dissipation, the thermal conduction of LED inner packaging and the lamp heat dissipation are generally designed; thus, the limit to the cost control of packaging process, physical volume, and weight is highly affected and bring trouble. Thus, the LED lamp of high power is nowadays rare in the market and is further not a product covered with a metallic housing for heat dissipation.

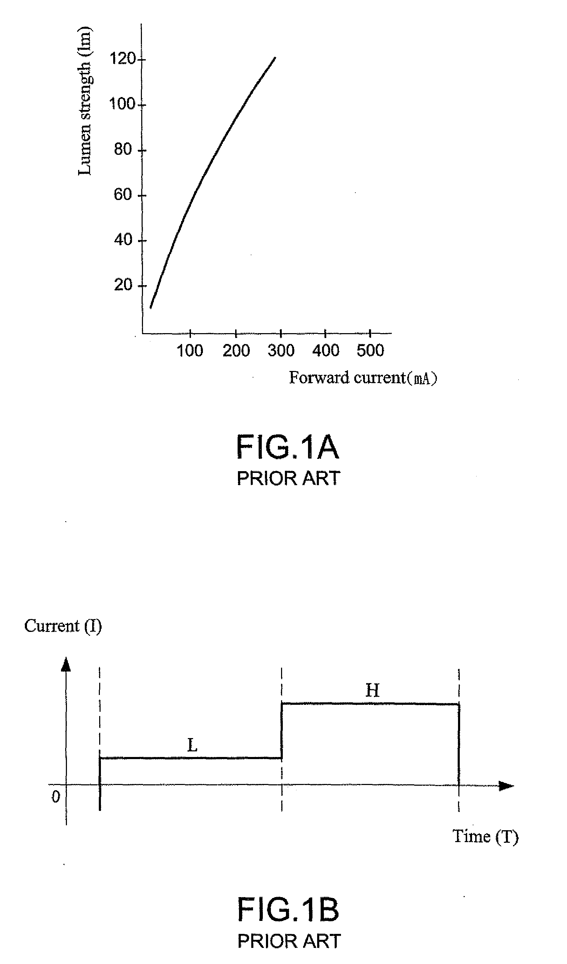

Next, heat is easily caused to affect its intensity of light (lumen) after the LED is driven and lights up for a period of time. In a conventional manner, DC power is directly inputted to drive the LED to give off visible light. LED is made mainly from GaAsP or GaP. When the materials are different, the rays of radiation light are different in wavelength and color; for example, GaAsP emits red light and GaP is in a color between yellow and green, and the intensity of light emitted by LED is proportional to turn-ON current, as shown in FIG. 1A. Thus, the intensity of light (lumen) is adjusted with inputted lower (L) or higher (H) DC current (I) for control, as shown in FIG. 1B. However, it drives LED to turn ON and light up for a long time and thus the heat is easily caused in a short time. If no better heat dissipation device is provided, LED's intensity of light is easily attenuated and its reliability is lowered.

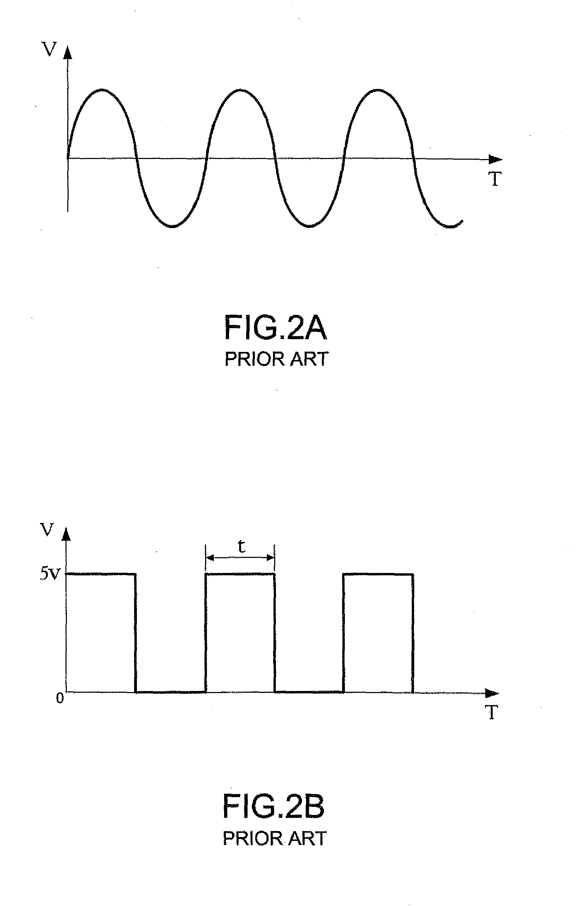

In FIGS. 2A and 2B, a conventional circuit designed with PWM (Pulse Width Modulation) to drive LED mainly functions to convert an amplitude of inputted voltage in FIG. 2A into a pulse of width in FIG. 2B and namely convert amplitude data into pulse width. Monitoring an output state of power circuit, it further supplies a power unit control signal, thereby being widely applied to a circuit capable of high power conversion. However, the oscillation waveform and amplitude voltage generated from the PWM circuit are determined; for example, the amplitude voltage driving the LED is set to 5V and thus the waveform and amplitude depends on the initial value to supply operating voltage and current, which explains the issue on the working temperature of LED that cannot be lowered.

Thus, currently, LED is not widely used for illumination because the heat dissipation is limited to the technology of LED packaging. Constant operating voltage and current causes high temperature; thus, even if the packaging technology is applied to dissipate heat, an expected effect does not easily reach. Besides, on the lamp, many heat dissipation devices, such as heat sink fins, are provided, which makes the physical volume of lamp increase and thus to be disadvantageous in installation indoors further makes the surface of lamp to be in high temperature; for example, if a table lamp using the LED as a light source, the surface of shell of the lamp is very hot and the surrounding is very hot, too, which compels a consumer to use a lamp covered with a metallic shell for fear of deformation caused by the high temperature unbearable and for fear of risk of bum down. Thus, improvement is still made.

Consequently, because of the technical defects of described above, the applicant keeps on carving unflaggingly through wholehearted experience and research to develop the present invention, which can effectively improve the defects described above.

A primary object of the invention is to provide an energy-saving drive device for controlling an LED heat dissipation temperature, in which when the device converts signal voltage into operating energy for control, through a load terminal obtaining feedback signal voltage and with a calculus processor continuously comparing the signals, the voltage and the current are adjusted and corrected so that it may drive the LED of high luminance and high power in the conditions of low voltage and low current depending on a load characteristic of the LED, which brings the efficiency of energy conservation, causes no issue on overheating, and develops the virtues of safety and environmental protection.

In order to achieve the above-mentioned object, an energy-saving drive device for controlling an LED heat dissipation temperature includes:
a) a DC power source for supplying power to a LED load terminal;
b) a pulse oscillator (Pulse OSC) for generating a pulse signal voltage (V1) by means of the current inputted from the DC power source;
c) a preamplifier connected to an output terminal of the pulse oscillator to amplify the pulse signal voltage (V1) for obtaining an amplified signal voltage (V2);
d) a carrier signal modulation unit having a calculus processor, a signal comparison circuit connected to the calculus processor, and at least three signal processors connected to the signal comparison circuit, in which each of the signal processors is connected to each of the signal differential amplifiers to compare the amplified signal voltage (V2) at least more than three times and output a comparison signal voltage (V3);
e) a voltage and current modulation unit having a signal converter to convert the frequency of comparison signal voltage (V3), a DC voltage processor, a constant voltage circuit, a DC current processor, and a constant current circuit being provided for the processing purpose, a power amplifier being employed to amplify the compared and processed constant voltage (V4) and constant current (14) that are then transmitted to the LED load terminal; and
f) a feedback signal circuit connected between the LED load terminal and the calculus processor, in which it obtains a load signal voltage (V5) from the LED load terminal, obtains a comparison signal voltage (V6) inputted to an input terminal of the calculus processor after feedback, and after arrangement, uses the signal processors to modulate software program at least more than three times and uses the signal differential amplifiers to automatically regulate, offset, and amplify the attenuated signal voltage and connect them respectively to the DC voltage processor and the DC current processor, thereby making the power amplifier output a new operating voltage signal (V4n) to re-drive the LED load terminal.

FIG. 1A is a chart showing the relationship between the current and lumen intensity of a conventional LED;
FIG. 1B is a chart showing the relationship between the current and time of the conventional LED;
FIG. 2A is a schematic view of a conventional voltage amplitude;
FIG. 2B is a schematic view illustrating a PWM amplitude driving the LED;
FIG. 3 is a schematic view illustrating a structure according to the invention;
FIG. 4 is a circuit diagram of a device according to the invention that is applied to a LED as a load;
FIG. 5A is a reference view of the driving device according to the invention that is applied to a cup lamp of LED;
FIG. 5B is a reference view of the driving device according to the invention that is applied to a LED bulb;
FIG. 5C is a reference view of the driving device according to the invention that is applied to a strip lamp of LED;
FIG. 6 is a chart showing the comparison between the invention and the conventional amplitude; and
FIGS. 7A and 7B are enlarged views a carrier modulation amplitude shown in FIG. 6.

Now, the present invention will be described more specifically with reference to the following embodiments. It is to be noted that the following descriptions of preferred embodiments of the invention are presented herein for purpose of illustration and description only; it is not intended to be exhaustive or to be limited to the precise form disclosed.

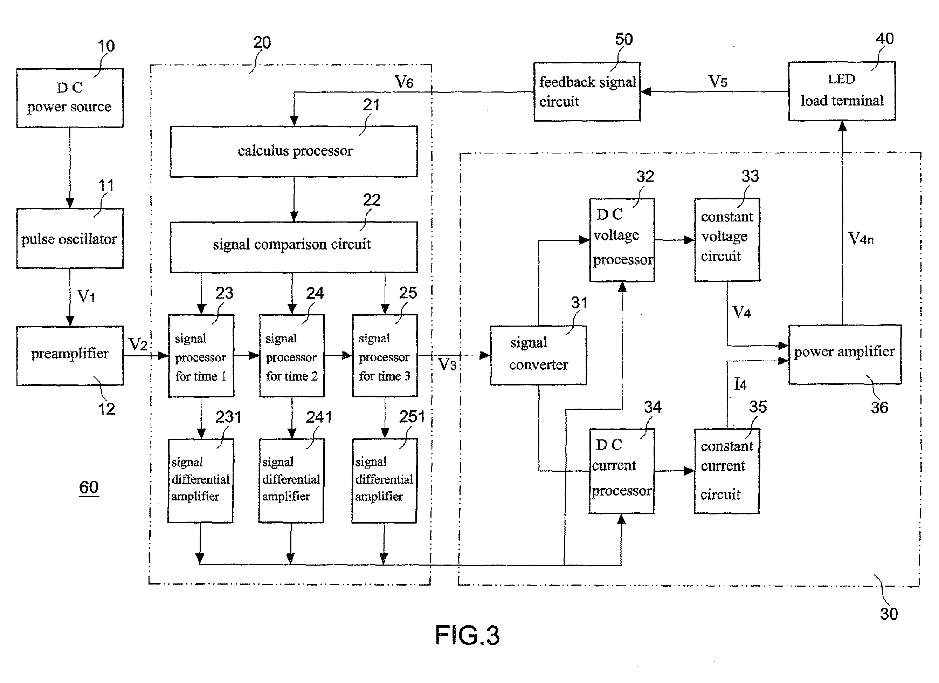

With reference to FIG. 3 as a structural view illustrating an energy-saving driving device according to the invention, the device comprises a DC power source 10 supplying power to an LED load terminal 40; a pulse oscillator 11 making the current inputted from the DC power source 10 generate a pulse signal voltage V1; a preamplifier 12 connected to an output terminal of the pulse oscillator 11 to amplify the pulse signal voltage V1 for obtaining an amplified signal voltage V2; a carrier signal modulation unit 20 comprising a calculus processor 21, a signal comparison circuit 22 connected to the calculus processor 21, and at least three signal processors 23, 24, and 25 connected to the signal comparison circuit 22, in which each of the signal processors 23∼25 is connected to each of the signal differential amplifiers 231, 241, and 251 to compare the amplified signal voltage V2 at least more than three times and output a comparison signal voltage V3; a voltage and current modulation unit 30 that uses a signal converter 31 to convert the frequency of comparison signal voltage V3 and that, after separately processing a DC voltage processor 32, a constant voltage circuit 33, a DC current processor 34 and a constant current circuit 35, uses a power amplifier 36 to amplify the compared and processed constant voltage V4 and constant current I4, and then transmits them to the LED load terminal 40; and a feedback signal circuit 50 connected between the LED load terminal 40 and the calculus processor 31, in which it obtains a load signal voltage V5 from the LED load terminal 40, obtains a comparison signal voltage V6 inputted to an input terminal of the calculus processor 21 after feedback, and after arrangement, uses the signal processors 23∼25 to modulate software program at least more than three times and uses the signal differential amplifiers 231, 241, and 251 to automatically regulate, offset, and amplify the attenuated signal voltage and connect them respectively to the DC voltage processor 32 and the DC current processor 34, thereby making the power amplifier 36 output a new operating voltage signal V4n to re-drive the LED load terminal 40. Through modulation of the corrected operating voltage signal, the LED load terminal 40 may be driven with low voltage and low current for achievement of heat dissipation.

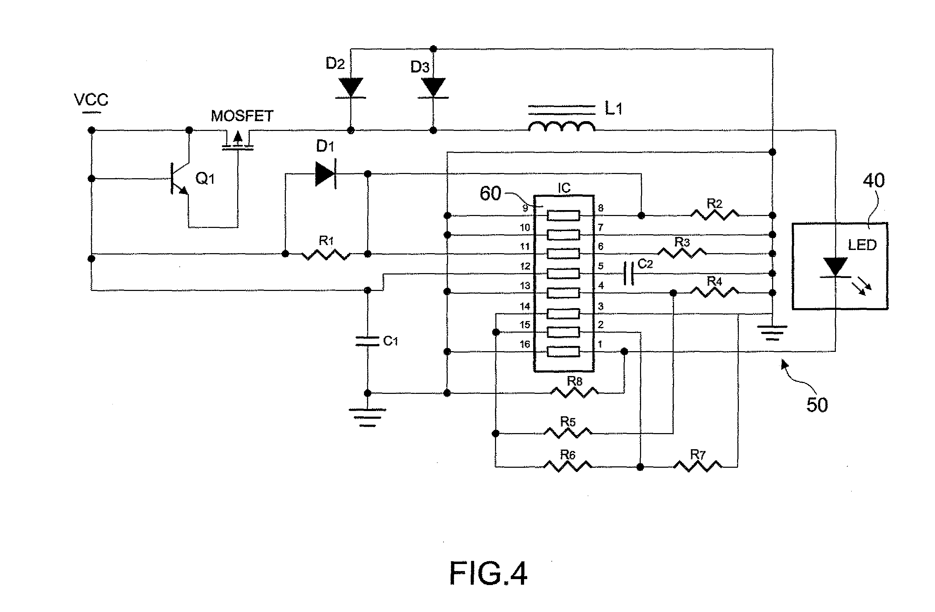

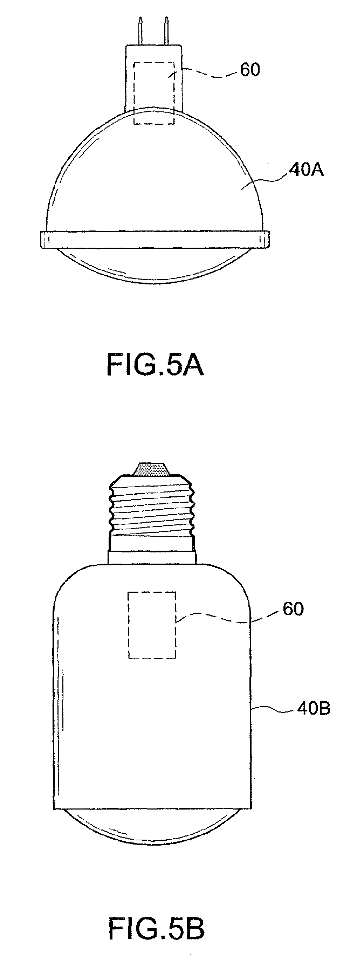

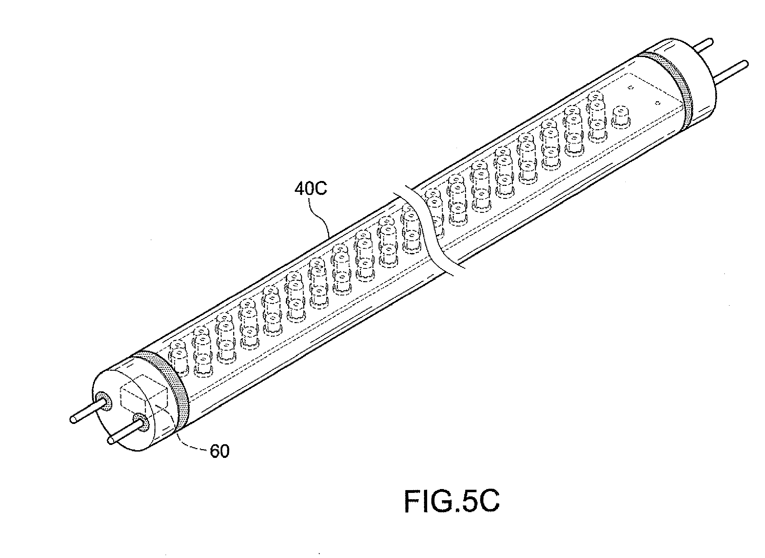

With reference to FIG. 4 as a circuit diagram of the invention that is applied to the LED load terminal 40, a driving device 60 according to the invention is designed into an integrated circuit IC around which components are those required by the driving device 60, thereby unnecessary details being not given here. The LED load terminal 40 comprises a LED-based cup lamp 40A as shown in FIG. 5A, a LED-based bulb 40B as shown in FIG. 5B, or a LED-based strip lamp 40C as shown in FIG. 5C. The driving circuit product according to the invention is sized in around 1.5×1.5×1.0 cm and thus may be easily arranged inside the LED illuminator.

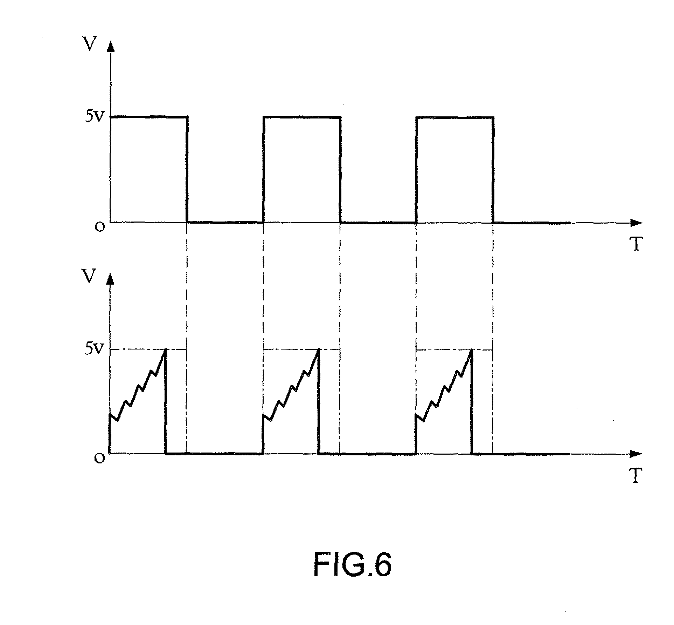

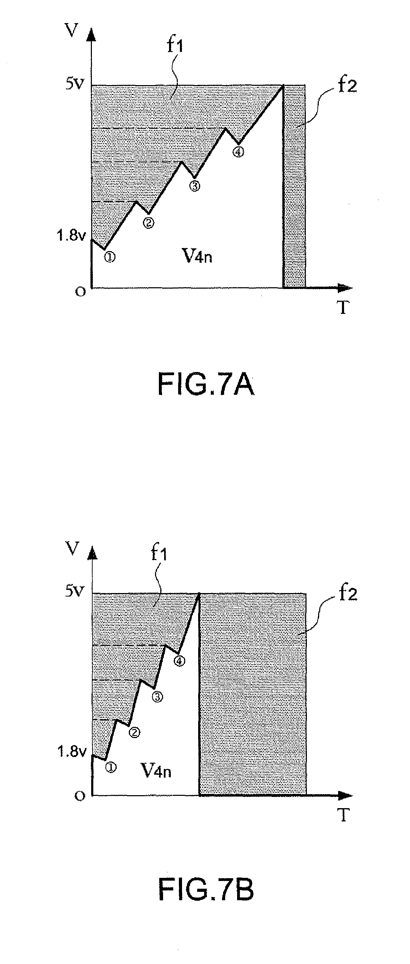

With reference to FIGS. 3 and 6, in which a square wave chart shown above in FIG. 6 is a general PWM chart, for example, the voltage amplitude high is 5V and low is 0V, and the frequency is 1kHz in the square wave. The chart shown below illustrates the carrier signal modulation unit 20 and the voltage and current modulation unit 30 that are shown in FIG. 3, in which on a PWM pulse of width, the comparison signal voltage V6 is obtained from the LED load terminal 40 through feedback, the signal voltage is continuously compared through the calculus processor 21, the oscillation waveform, the amplitude voltage, and the linearity of waveform are controlled through more than 3 times of software modulation to show the result of carrier modulation, as shown in a lower chart of FIG. 6 that illustrates irregular inclined serration, and if it is amplified, as shown in FIGS. 7A and 7B, in which regarding the carrier modulation in FIG. 7A, around 1.8V amplitude voltage is inputted, signals are compared at time 1, 2, 3, 4, etc. and modulated by using software, and the signal differential amplifiers 231, 241, and 251 are used to automatically regulate, offset, and amplify the attenuated signal voltage and make the power amplifier 36 output a new operating voltage signal V4n for correcting the voltage and the current. Depending on the load characteristic of LED-based product, the driving device according to the invention may modulate the voltage and current impedance matching at the load terminal for minimum loss and for achievement of power saving. Gray zones in FIG. 7A, f1 and f2, stand for saved voltage and current, while FIG. 7B illustrates amplitude varying with different current, namely, the control current input increasing or decreasing to change the waveform and amplitude.

Thus, through constant modulation of the invention, the LED of high luminance and high power may be driven in the conditions of low voltage and low current, which brings the efficiency of energy conservation, causes no issue on overheating, and develops the virtues of safety and environmental protection.

From the technical manner described above, a comparison sheet is made below for the driving device according to the invention that is applied to the LED, and the conventional driving device under a field-trial test.

| | Conventional Driving Device | | the invention | |
|---|---|---|---|---|
| Sample | 1W | 3W | 1W | 3W |
| Operating Voltage (DCV) | 12 | 12 | 3∼12 | 3∼12 |
| Operating Current (DCA) | 0.19∼0.20 | 0.24∼0.25 | 0.16 | 0.18 |
| Distance (m) | 1 | 1 | 1 | 1 |
| Temp. (°C) | 55∼58 | 65∼67 | 39∼40 | 52∼53 |
| Lumen (Lux) | 270∼280 | 320∼330 | 340∼350 | 390∼400 |
| Consumed Power (w) | 2.28∼2.40 | 2.88∼3.00 | 1.92 | 2.16 |
| Remarks | Provided with secondary optics | | | |

### Notes:

The conventional driving device samples are products sold in market.

The comparison sheet gives data from comparison of samples; if the manufacturer's samples are different, the sets of data of comparison are different.

From the comparison sheet, in the invention, the comparison signal voltage V6 is obtained at the LED load terminal through feedback, the signal voltage is continuously compared through the calculus processor 21, and modulation is made with software at least more than 3 times and the signal differential amplifier is used to automatically regulate, offset, and amplify the attenuated signal voltage into a new operating voltage signal for correction of the voltage and current so that the LED may be driven in the conditions of low current, 0.16 DCA and 0.18 DCA, the temperature of which may be constantly in the ranges of 39∼40 °C and 52∼53 °C; further, the luminance (Lux) of LED relatively increases and the power consumption W decreases.

Thus, in the invention, the LED of high luminance and high power may be driven in the conditions of low voltage and low current, which brings the efficiency of energy conservation and causes no issue on overheating. Accordingly, the device according to the invention may be provided inside the LED-based cup lamp 40A, LED-based bulb 40B, and LED-based strip lamp 40C that are respectively shown in FIGS. 5A, 5B, and 5C. The issue on heat dissipation may be solved, so the LED-based product is not necessarily provided with any heat sink device arranged outside and thus may be provided in the original physical volume. Thus, for achievement of convenience and function, it may be compatible with a previous lamp and is not necessarily fully replaced.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. An energy-saving drive device for controlling an LED heat dissipation temperature, comprising:
a) a DC power source (10) for supplying power to a LED load terminal (40);
b) a pulse oscillator (Pulse OSC) (11) for generating a pulse signal voltage (V1) by means of the current inputted from the DC power source (10);
c) a preamplifier (12) connected to an output terminal of the pulse oscillator (11) to amplify the pulse signal voltage (V1) for obtaining an amplified signal voltage (V2);
d) a carrier signal modulation unit (20) having a calculus processor (21), a signal comparison circuit (22) connected to the calculus processor (21), and at least three signal processors (23) , (24) , (25) connected to the signal comparison circuit (22), in which each of the signal processors (23 - 25) is connected to each of the signal differential amplifiers (231) , (241) , (251) to compare the amplified signal voltage (V2) at least more than three times and output a comparison signal voltage (V3);
e) a voltage and current modulation unit (30) having a signal converter (31) to convert the frequency of comparison signal voltage (V3), a DC voltage processor (32), a constant voltage circuit (33), a DC current processor (34), and a constant current circuit (35) being provided for the processing purpose, a power amplifier (36) being employed to amplify the compared and processed constant voltage (V4) and constant current (14) that are then transmitted to the LED load terminal (40); and
f) a feedback signal circuit (50) connected between the LED load terminal (40) and the calculus processor (31), in which it obtains a load signal voltage (V5) from the LED load terminal (40), obtains a comparison signal voltage (V6) inputted to an input terminal of the calculus processor (21) after feedback, and after arrangement, uses the signal processors (23 - 25) to modulate software program at least more than three times and uses the signal differential amplifiers (231) , (241) , (251) to automatically regulate, offset, and amplify the attenuated signal voltage and connect them respectively to the DC voltage processor (32) and the DC current processor (34), thereby making the power amplifier (36) output a new operating voltage signal (V4n) to re-drive the LED load terminal (40).

2. The energy-saving drive device for controlling LED heat dissipation temperature as recited in claim 1, wherein the LED load terminal is selected from a group consisting of a cup lamp (40A), a bulb (40B), and a strip lamp (40C).
